# EUROPEAN PATENT SPECIFICATION

(11) **EP 3 926 785 B1**
(45) Date of publication and mention of the grant of the patent: **10.07.2024**
(21) Application number: 20908340.1
(22) Date of filing: 30.11.2020
(51) Int. Cl.: H02J 7/00, B60L 58/18, B60L 3/00, B60L 3/04, B60L 58/21, B60L 58/19, H01M 10/42, H01M 10/48

(54) **BATTERY PACK INCLUDING CELL SWITCHING DEVICE OF PARALLEL CONNECTION CELLS AND CELL SWITCHING METHOD**
BATTERIEPACK MIT ZELLENVERMITTLUNGSVORRICHTUNG VON PARALLELEN VERBINDUNGSZELLEN UND ZELLENVERMITTLUNGSVERFAHREN
BLOC-BATTERIE COMPRENANT UN DISPOSITIF DE COMMUTATION DE CELLULES DE CELLULES DE MONTAGE EN PARALLÈLE ET PROCÉDÉ DE COMMUTATION DE CELLULES

(30) Priority: 24.12.2019 KR 20190174156
(43) Date of publication of application: 22.12.2021
(73) Proprietor: LG Energy Solution, Ltd., Seoul 07335 (KR)
(72) Inventor: KIM, Jeong Wan, Daejeon 34122 (KR)
(74) Representative: Plasseraud IP
(86) International application number: PCT/KR2020/017241
(87) International publication number: WO 2021/132913

(56) References cited:
- JP-A- 2012 150 086
- JP-A- 2013 038 884
- JP-B2- 5 667 123
- KR-A- 20070 091 814
- KR-A- 20180 044 750
- US-A1- 2019 222 037

## Description

### [Technical Field]

The present invention relates to a battery pack including a cell switching device of parallel connection cells and a cell switching method, and more particularly, to a battery pack including a cell switching device for replacing a specific cell in which a connection is disconnected among cells connected in parallel with a replacement cell and a cell switching method.

### [Background Art]

Unlike primary batteries that cannot be recharged, rechargeable secondary batteries are widely used in various fields ranging from electric bicycles, electric vehicles, and energy storage systems (ESS) as well as small high-tech electronic devices such as smart phones, notebook computers, and tablet PCs.

Because medium and large devices such as electric bicycles, electric vehicles, and energy storage systems (ESS) require high power and large capacity, when the secondary battery is applied to medium and large devices, a plurality of battery cells are directly/parallel connected to use battery packs electrically connected to each other.

In general, battery cells included in battery packs are protection elements to ensure safety during charging and are equipped with a current interruption device (CID) that cuts off when the pressure inside the cell increases to prevent current from flowing through the cell, so that they are configured to safely prevent overcharging of the battery.

However, if the CID of a specific battery cell operates while the battery cells are connected in parallel, since the connection of the corresponding failure battery cell is disconnected, overcurrent flows in the remaining normal battery cells parallel connected with the failure battery cell by the current flowing through the failure battery cell, so that overloading occurs on normal battery cells. In addition, even when disconnection of a specific battery cell occurs among parallel connected battery cells due to a cause such as opening of the parallel connection line of a specific battery cell in addition to the operation of the protection element such as CID as above, overcurrent flows through the remaining normal battery cells.

Such a phenomenon has a problem in that the deterioration of the cell is promoted, resulting in a decrease in the performance and life of the battery.
(Patent Literature 1) KR10-2018-0034138 A
(Patent Literature 2) JP 2013 038884 A

### [Disclosure]

### [Technical Problem]

The present invention is to solve the above-described problem, and to provide a cell switching device capable of replacing a corresponding cell with a replacement cell when a number of battery cells are connected in parallel and the parallel connection line of a specific cell is opened or disconnection occurs due to CID operation.

### [Technical Solution]

According to the present invention, a battery pack including at least one cell parallel line formed by arranging a plurality of battery cells in parallel includes: a first cell bank configured by connecting a predetermined number of sequentially adjacent battery cells in parallel from a first cell among battery cells constituting the cell parallel line; and a second cell bank configured by connecting the remaining cells in parallel except for the battery cells set as the first cell bank among the battery cells constituting the cell parallel line, wherein the first cell bank and the second cell bank are electrically separated, wherein among the battery cells of the second cell bank, a battery cell closest to the first cell bank is set as a replacement cell, wherein when a failed cell occurs in the first cell bank, the replacement cell is electrically separated from the second cell bank and connected in parallel to the first cell bank to replace the failed cell.

Furthermore, the first cell bank operates as a main power supply source for a principal device in which a battery pack is mounted, and the second cell bank operates as an auxiliary power supply source for additional devices mounted on the principal device.

In addition, the battery pack may further include a switch configured to perform a switching operation for replacing a failed cell occurring in the first cell bank with a replacement cell, wherein the switch includes: a first switch provided on a first parallel connection line connecting a replacement cell of the second cell bank and battery cells of the first cell bank in parallel to control a connection flow between the replacement cell and the first cell bank; and a second switch provided on a second parallel connection line connecting a replacement cell of the second cell bank and the remaining cells in parallel to control a connection flow between the replacement cell and the remaining cells.

In addition, the battery pack may further include a control unit configured to control a switching operation of the first and second switches according to whether a failed cell occurs due to an open parallel connection line or a CID operation in the first cell bank.

In the case of a normal state in which no failed cell occurs in the first cell bank, the control unit turns off the first switch and turns on the second switch, thereby blocking the connection of the replacement cell to the battery cells of the first cell bank, and connecting the replacement cell to the remaining battery cells of the second cell bank.

Moreover, when a failed cell occurs in the first cell bank, the control unit turns on the first switch and turns off the second switch to separate the replacement cell from the second cell bank and connect the replacement cell to the battery cells of the first cell bank, thereby replacing the failed cell with the replacement cell.

According to the present invention, a cell switching method includes: a cell parallel line formation step of arranging a plurality of battery cells in parallel to form a cell parallel line; a cell bank setting step of sequentially connecting a predetermined number of battery cells in parallel from a first cell among battery cells constituting the cell parallel line to be set as a first cell bank, and connecting the remaining battery cells in parallel except for the battery cells set as the first cell bank to be set as a second cell bank; a failed cell detection step of detecting whether a failed cell occurs due to an open parallel connection line or a CID operation in the first cell bank; and a failed cell replacement step of replacing the failed cell with a replacement cell belonging to the second cell bank when the failed cell occurs in the first cell bank.

Moreover, the first cell bank operates as a main power supply source for a principal device in which a battery pack is mounted, and the second cell bank operates as an auxiliary power supply source for additional devices mounted on the principal device.

Specifically, the failed cell replacement step may include: a replacement cell separation step of electrically separating the replacement cell from the second cell bank by turning off a second switch provided on a parallel connection line between the replacement cell of the second cell bank and the remaining battery cells; and a replacement cell connection step of connecting the replacement cell separated from the second cell bank to the first cell bank in parallel by turning on a first switch provided on a parallel connection line between the replacement cell and the battery cells of the first cell bank.

Here, the replacement cell is located closest to the first cell bank among battery cells of the second cell bank.

### [Advantageous Effects]

The present invention replaces a specific cell in which a parallel connection line is opened or disconnected due to a CID operation among cells connected in parallel with a normal replacement cell through a switching operation, so that it is possible to prevent safety problems and cell deterioration problems that occur in the remaining normal cells due to the effect of a connection failure of a specific cell, and further, it is possible to prevent battery performance degradation due to these problems.

### [Description of Drawings]

FIG. 1 is a diagram schematically showing a battery pack having a cell switching device according to the present invention.
FIG. 2 is a diagram schematically showing an electrical connection state in a normal state in which a failed cell does not occur.
FIG. 3 is a diagram schematically illustrating an electrical connection state in a state in which a failed cell occurs and a switching operation is performed.
FIG. 4 is a flowchart showing a cell switching method according to the present invention.

### [Mode for Invention]

Hereinafter, embodiments of the present invention will be described in detail with reference to the accompanying drawings so that those of ordinary skill in the art may easily implement the present invention. However, the present invention may be implemented in various forms within the scope of the attached claims.

In the drawings, parts irrelevant to the description are omitted in order to clearly describe the present invention, and like reference numerals refer to like elements throughout the specification.

Hereinafter, the present invention will be described in detail with reference to the drawings.

### 1. Battery Pack including Cell Switching Device of Parallel Connection cells

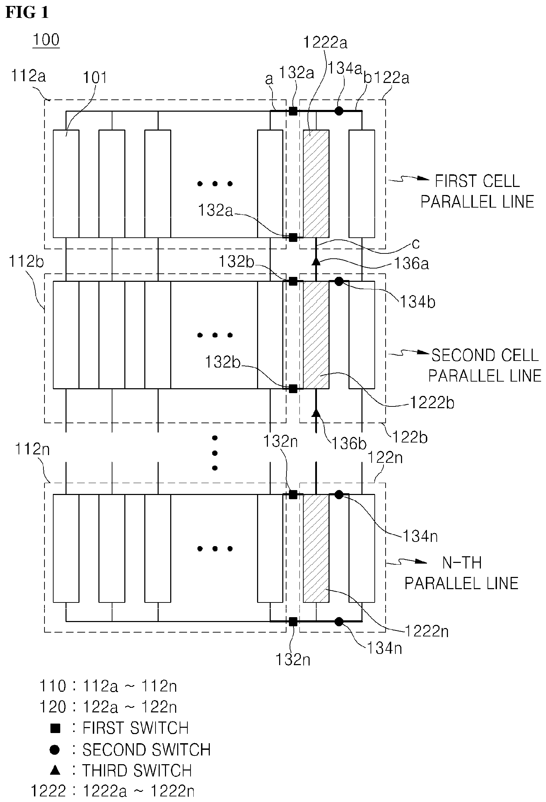

FIG. 1 is a diagram schematically showing the overall configuration of a battery pack including a cell switching device according to the present invention. Referring to this, the battery pack including the cell switching device according to the present invention may be configured to include the following configuration.

Referring to FIG. 1, in a battery pack 100, a plurality of battery cells 101 are arranged in parallel to form one cell parallel line, and at least one cell parallel line is arranged in series. This can be divided and explained as follows.

### 1.1. First Cell Bank 112

As described above, a plurality of battery cells 101 are arranged in parallel to form one cell parallel line, and among the battery cells forming the cell parallel line, as a main power supply source for a device equipped with a battery pack, a predetermined number of adjacent battery cells sequentially from the first cell are divided into one group, and by connecting these battery cells in parallel, the group is referred to as a first cell bank 112.

As shown in FIG. 1, the same number of battery cells are divided into first cell banks 112a to 112n for each cell parallel line (first cell parallel line to N-th cell parallel line), and the battery cells constituting the first cell bank in one cell parallel line are connected in parallel, and the battery cells of the first cell bank facing each cell parallel line are connected in series, so that all battery cells constituting the first cell bank included in the battery pack 100 are electrically connected to each other in a serial/parallel state to form one battery module. Here, a battery module configured by connecting at least one first cell bank in series is referred to as a first battery module 110.

That is, the battery cells constituting the first cell bank 112a of the first cell parallel line are connected in series with the battery cells constituting the first cell bank 112b of the second cell parallel line opposite thereto, and the battery cells constituting the first cell bank 112n-1 of the (N-1)-th cell parallel line are connected in series with the battery cells constituting the first cell bank 112n of the N-th cell parallel line so as to constitute the first battery module 110.

The first battery module 110 configured as described above may function as a main power supply source in a device equipped with a battery pack. When the device on which the battery pack is mounted is, for example, a vehicle, the first battery module 110 functions as a battery module for driving a motor that provides power for driving the motor.

That is, since the first battery module functions as the main power supply source of the device, as for the number of battery cells constituting the first cell bank 112, it is preferable to divide the majority of battery cells among the battery cells constituting the cell parallel line into the first cell bank.

For example, when one cell parallel line is composed of 13 battery cells, at least 8 or more battery cells may be set as the first cell bank.

The first cell bank 112 is electrically separated from the second cell bank 122 to be described later.

### 1.2. Second Cell Bank 122

As described above, by connecting the remaining battery cells in parallel except for the battery cells divided into the first cell bank in one cell parallel line, the remaining battery cells may be referred to as a second cell bank as one group. As shown in FIG. 1, the same number of battery cells for each cell parallel line is divided into a second cell bank 122, and the battery cells 101 constituting the second cell bank in one cell parallel line are connected in parallel, and the battery cells of the second cell bank facing each cell parallel line are connected in series, respectively, and all the battery cells 101 constituting the second cell banks 122a to 122n included in the battery pack 100 are electrically connected to each other in a series/parallel state to form one battery module. Here, a battery module configured by connecting at least one second cell bank in series is referred to as a second battery module 120.

That is, the battery cells constituting the second cell bank 122a of the first cell parallel line are connected in series with the battery cells constituting the second cell bank 122b of the second cell parallel line opposite thereto, and the battery cells constituting the second cell bank 122n-1 of the (N-1)-th cell parallel line are connected in series with the battery cells constituting the second cell bank 122n of the N-th cell parallel line so as to constitutes the second battery module 120.

The second battery module 120 configured as described above may function as an auxiliary power supply source in a device equipped with a battery pack. When the device on which the battery pack is mounted is, for example, a vehicle, the second battery module 120 functions as a battery module for driving additional devices to provide power for driving additional devices mounted on a vehicle such as audio, navigation, and black box.

That is, since the second battery module functions as an auxiliary power supply source for the device, as for the number of battery cells constituting the second cell bank, it is preferable to divide a small number of battery cells among the battery cells constituting the cell parallel line into the second cell bank.

For example, when 13 battery cells form one cell parallel line, 11 battery cells may be set as a first cell bank, and the remaining two battery cells may be set as a second cell bank. However, the present invention is not limited thereto, and the above is an example for understanding the description, and the first cell bank is the main power source of the device, and the configuration ratio of the second cell bank may vary as long as it can sufficiently function as an auxiliary power supply source for the device.

In general, for example, when the device is a vehicle, a lead acid battery is used as a power supply source for additional devices such as navigation, black box, audio, and the like. In contrast, the present invention constitutes the second cell bank by replacing the existing lead acid battery, and allows battery cells constituting the second cell bank to function as a power supply source for the additional devices, which is the role of the existing lead acid battery, and sets one of these battery cells as a replacement cell. Accordingly, it is not necessary to separately prepare a new replacement cell, thus simplifying the circuit configuration, and since the replacement cell is also being used as a power source, even if the failed cell that is used as the main power source is replaced with a replacement cell, it is possible to maintain a more uniform SOH with the remaining normal battery cells of the first cell bank as compared to replacing with a separate unused battery cell. Therefore, it is possible to increase the efficiency of life management of battery cells.

### A. Replacement cell 1222

The replacement cell may function as a role of replacing a failed cell when a connection failure occurs due to a parallel connection line or CID operation in a specific cell among cells constituting the first cell bank 112.

This replacement cell may be set to any one of the battery cells constituting the second cell bank 122.

For example, as shown in FIG. 1, among the battery cells of the second cell bank 122, a battery cell located closest to the battery cell of the first cell bank 112 may be set as the replacement cell 1222. In this case, it is possible to replace the failed cell occurring in the first cell bank with a replacement cell in an uncomplicated circuit configuration.

### 1.3. Switch 130

The switch is a configuration that controls the connection flow so that the replacement cell replaces the failed cell occurring in the first cell bank by operating on/off under control of a control unit to be described later and may include a first switch 132 and a second switch 134.

### A. First Switch 132

The first switch is provided on a first parallel connection line a connecting the replacement cell 1222 in the second cell bank 122 and the first cell bank 112 in parallel, and may be a configuration for controlling the flow of electrical connection between the battery cells of the first cell bank 112 and the replacement cell 1222 of the second cell bank 122. Here, as shown in FIG. 1, since the first parallel connection line a is formed at both the upper and lower ends of the battery cell, the first switch 132 is also provided at each of the upper and lower ends of the battery cell.

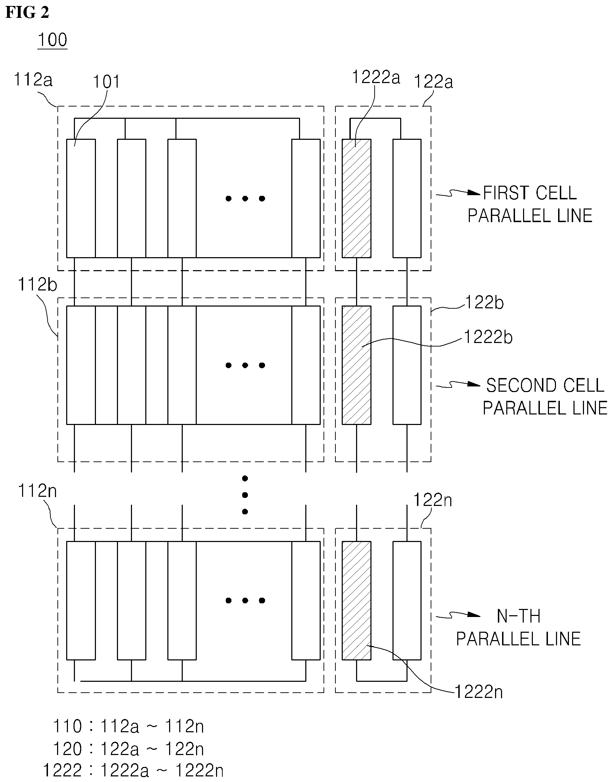

The first switch 132 is controlled to an off state in a normal state in which a failed cell does not occur in the first cell bank 112, and as shown in FIG. 2, the flow of electrical connection between the first cell bank 112 and the replacement cell 1222 is blocked.

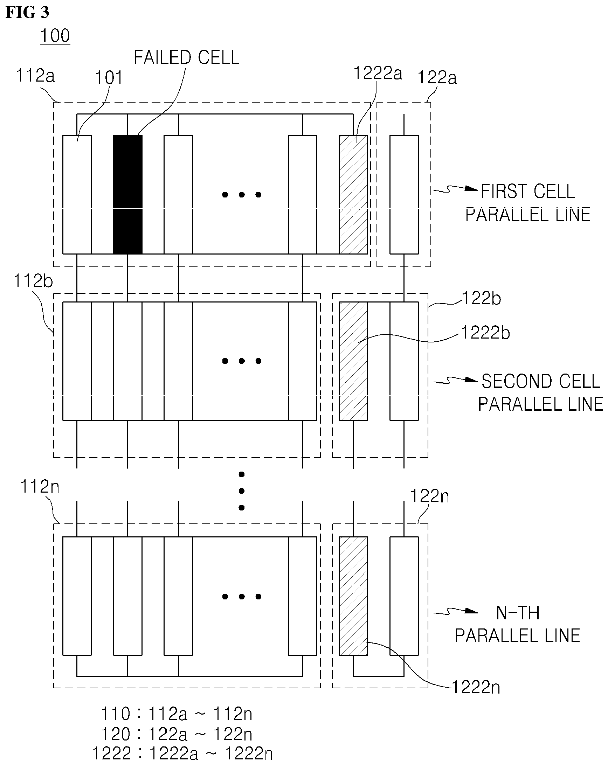

Thereafter, for example, when a failed cell occurs in the first cell bank 112a of the first cell parallel line, the first switch 132a in the first cell parallel line is controlled in an on state, and as shown in FIG. 3, by opening the electrical connection flow between the battery cells of the first cell bank 112a and the replacement cell 1222a, the replacement cell 1222a may perform its function as a member of the first cell bank 112.

### B. Second switch 134

The second switch is provided on a second parallel connection line b connecting the replacement cell 1222 in the second cell bank 122 and the remaining cells in parallel, and may be a configuration for controlling a connection flow between the replacement cell 1222 of the second cell bank 122 and the remaining cells. Here, as shown in FIG. 1, when configuring N cell parallel lines in the battery pack, the second parallel connection line b is formed only at the upper end of the battery cell from the first to the (N-1)-th cell parallel line, and is formed at both the upper and lower ends of the battery cells in the N-th cell parallel line located at the bottom. Accordingly, only one second switch 134 is provided per cell parallel line from the first to (N-1)-th cell parallel lines, but is provided at both the upper and lower ends of the battery cell in the N-th cell parallel line.

This second switch 134 is controlled to be in an on state in a normal state in which a failed cell does not occur in the first cell bank 112, and as shown in FIG. 2, the replacement cell 1222 of the second cell bank 122 and the remaining cells are electrically connected to each other, so that the replacement cell 1222 functions as a member of the second cell bank 122.

Then, as shown in FIG. 3, for example, when a failed cell occurs in the first cell bank 112a of the first cell parallel line, the second switch 134a of the first cell parallel line is controlled in an off state, and the second switch 134b of the second cell parallel line is controlled in an on state, and as disconnecting the replacement cell 1222a from the second cell bank 122a by blocking the flow of electrical connection between the replacement cell 1222a of the second cell bank 122a and the remaining battery cells, the remaining battery cells constituting the second battery module 120 may be electrically connected to each other in a serial/parallel state.

### C. Third switch 136

As shown in FIG. 1, in the case of configuring N cell parallel lines in the battery pack 100, in cell parallel lines configured between the cell parallel lines excluding first and N-th cell parallel lines among the first to N-th cell parallel lines, that is, the second to (N-1)-th cell parallel lines, each battery cell of the second cell bank is connected in series with each battery cell of the second cell bank of an opposite adjacent cell parallel line, and in this case, a third switch 136 for controlling the connection flow may be additionally provided on the series connection line c.

The third switch 136 may replace a failed cell and block a connection between a replacement cell connected in parallel to the first cell bank 112 and the remaining battery cells of the second battery module 120.

Initially, all the third switches 136 are controlled in an on state to connect the replacement cells configured in each cell parallel line in series with each other, and for example, if a failed cell occurs in the first cell bank 112a of the first parallel line, the third switch 136a provided on the series connection line c between the replacement cell 1222a of the first cell parallel line and the replacement cell 1222b of the second cell parallel line is controlled in an off state to block an electrical connection flow.

### 1.4. Control Unit (not shown)

The control unit is a configuration that controls on/off of the first switch 132, the second switch 134, and the third switch according to whether a failed cell is detected by an external failed cell detection system and allows the replacement cell 1222 of the second cell bank 122 to replace the failed cell occurring in the first cell bank 112.

### <Embodiment 1: When Configuring Single Cell Parallel line>

More specifically, as described above, in a normal state in which a failed cell does not occur in the first cell bank 112, by controlling the first switch 132 to an off state and the second switch 134 to an on state, the first cell bank 112 and the second cell bank 122 may be electrically separated, and the replacement cell 1222 may function as a member of the second cell bank 122.

In that state, when receiving a control signal indicating that a failed cell occurs due to an open parallel connection line or CID operation among the battery cells belonging to the first cell bank 112 in the external failed cell detection system, the first switch 132 configured on the cell parallel line including the first cell bank 112 to which the corresponding failed cell belongs is controlled in an on state, and the second switch 134 is controlled in an off state based on the control signal so that by separating the replacement cell 1222 from the second cell bank 122 and allowing the replacement cell 1222 to be included in the first cell bank 112, the replacement cell 1222 may function as a member of the first cell bank 112 by replacing the corresponding failed cell.

### <Embodiment 2: When Configuring Multiple Cell Parallel Lines>

As shown in FIG. 1, when a plurality of cell parallel lines are configured in N number, the above-described third switch 136 may be additionally controlled.

In the case of Example 2, in the normal state in which failed cells did not occur, all the first switches 132 of the battery pack are controlled in an off state, and the second switch 134a of the first cell parallel line and the second switch 134n located at the lower end of the N-th cell parallel line are controlled in an on state, and the remaining second switches are controlled in an off state, and in addition, the third switch 136 may be controlled in an on state to electrically connect the battery cells constituting the second cell bank of each cell parallel line in a series/parallel state to each other.

Thereafter, for example, if a failed cell occurs in the first cell bank 112a of the first cell parallel line, the first switch 132a of the first cell parallel line is controlled in an on state and the second switch 134a is controlled in an off state and the third switch 136a is controlled in an off state, so that the replacement cell 1222a of the first cell parallel line is separated from the second battery module 120 and connected in parallel to the first cell bank 112a, thereby allowing the replacement cell 1222a to function as the first battery module 110. In addition, by switching the second switch 134b of the second cell parallel line, which is the next line of the first cell parallel line, to an on state, the remaining battery cells constituting the second battery module 120 may be electrically connected to each other in a serial/parallel state.

Here, the external failed cell detection system is, for example, in the manner disclosed in Korean Patent Application Nos. 10-2019-0122268 and 10-2019-0122269 filed by the applicant of the present invention and may be configured as a system that detects a failed cell by opening a parallel connection line or operating a CID.

The control signal from the external failed cell detection system configured as described above may include, for example, a cell bank identification number or a cell parallel line identification number in order to identify the first cell bank or cell parallel line to which the failed cell belongs among the first battery modules 110 included in the battery pack 100.

For example, when a failed cell occurs in the first cell bank 112a included in the first cell parallel line, the control signal from the external failed cell detection system includes a first cell parallel line identification number or a corresponding first cell bank 112a identification number. The control unit receiving the transmission recognizes that a failed cell occurs in the first cell bank 112a belonging to the first cell parallel line based on the control signal. Therefore, by controlling the first switch 132a located on the first cell parallel line to be turned on and the second switch 134a to be turned off, as shown in FIG. 3, the replacement cell 1222a may be replaced to function by replacing the failed cell.

As such, when the present invention is a case in which a failed cell occurs due to a parallel connection line or CID operation among battery cells connected in parallel, a simple switching operation replaces the failed cell by replacing the failed cell with a normal replacement cell. Therefore, overcurrent flows to the remaining normal battery cells connected in parallel with the failed cell by the current flowing through the failed battery cell so that it is possible to prevent the occurrence of overloading of normal battery cells. Accordingly, it is possible to fundamentally solve the problem of reducing the performance and life of the battery by promoting deterioration of the remaining normal battery cells.

In addition, the present invention does not separately provide a replacement cell as an unused new battery cell, but instead replaces the existing lead acid battery and sets a battery cell that functions as a power supply source for additional devices installed in the device as a replacement cell. Accordingly, compared to unused battery cells, it is possible to balance the battery cells of the first cell bank used as a power supply source and the degree of cell degradation, that is, SOH. Accordingly, it is possible to bring an effect of maintaining a more uniform lifespan of the battery cells.

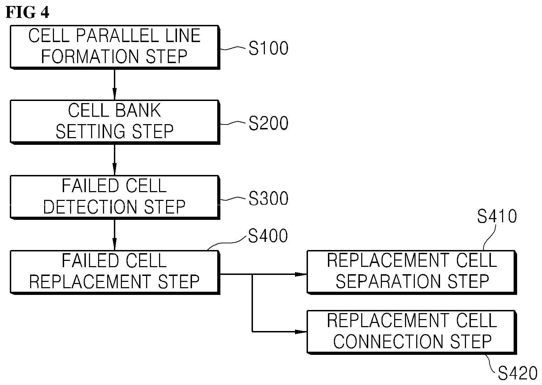

### 2. Cell Switching Method (refer to FIG. 4)

The cell switching method of a parallel connection cell according to the present invention may be configured including the following steps.

### 2.1. Cell Parallel Line Formation Step S100

The cell parallel line formation step is a step of forming one cell parallel line by arranging a plurality of battery cells 101 in parallel.

One or more of these cell parallel lines may be configured in the battery pack 100, as shown in FIG. 1, and in this case, the battery cells constituting one cell parallel line are connected in series with battery cells constituting the adjacent cell parallel line opposite to the battery cells.

In this case, not all battery cells constituting the cell parallel line are electrically connected in parallel, and also, not all battery cells constituting one cell parallel line are electrically connected in series with all battery cells constituting an adjacent cell parallel line opposite to each of them, and are classified according to its role/function and are electrically interconnected in a serial/parallel connection state. This will be described in detail in the cell bank setting step described later.

### 2.2. Cell Bank Setting Step S200

In order to distinguish between the main and auxiliary power sources for devices with battery packs, among the battery cells constituting the cell parallel line, a predetermined number of battery cells sequentially adjacent to each other are connected in parallel from the first cell to be set as the first cell bank 112, that is, one group, and the remaining battery cells are connected in parallel to be set as the second cell bank 122, that is, one group, and the first and second cell banks 112 and 122 are electrically separated.

Meanwhile, among the battery cells constituting the second cell bank 122, the battery cell located closest to the first cell bank 112 is configured as a replacement cell 1222.

The replacement cell refers to a battery cell that is electrically separated from the second cell bank 122 and is connected to the battery cells of the first cell bank to replace the failed cell, as described above, when a failed cell occurs due to a parallel connection line open or CID operation in the first cell bank 112.

As described above, based on the replacement cell 1222, a first switch 132 is provided on a parallel connection line a between the replacement cell and the battery cells of the first cell bank 112, and a second switch 134 is provided on a parallel connection line b between the replacement cell and the remaining battery cells of the second cell bank 122, so that in a normal state in which a failed cell does not occur in the current first cell bank 112 by the first and second switches 112 and 122, the replacement cell 1222 is electrically separated from the first cell bank 112 and is connected to the second cell bank 122 to function as a member of the second cell bank 122.

Meanwhile, as shown in FIG. 1, when there are more than one cell parallel line, the same number of battery cells are set as the first cell banks 112a to 122n for respective cell parallel lines (first cell parallel line to N-th cell parallel line), and in one cell parallel line, the battery cells constituting the first cell bank are connected in parallel, and the battery cells of the first cell bank facing each cell parallel line are connected in series, so that the first battery module 110 is configured by electrically connecting all battery cells constituting the first cell banks 112a to 112n included in the battery pack 100 to each other in a series/parallel state.

In addition, battery cells constituting the second cell bank 122 in the cell parallel line are also connected in parallel, and the battery cells of the second cell bank facing each cell parallel line (first cell parallel line to N-th cell parallel line) are connected in series, so that the second battery module 120 is configured by electrically connecting all the battery cells constituting the second cell banks 122a to 122n included in the battery pack 100 to each other in a serial/parallel state.

The first cell banks 112a to 112n of the first battery module 110 configured as described above may function as a main power supply source in a device equipped with a battery pack. When the device on which the battery pack is mounted is, for example, a vehicle, the first cell banks 112a to 112n of the first battery module function as a battery module for driving a motor that provides power for driving the motor.

Meanwhile, the second cell banks 122a to 122n of the second battery module 120 may function as an auxiliary power supply source in a device in which the battery pack is mounted. When the device is, for example, a vehicle, the second cell banks 122a to 122n of the second battery module function as battery modules for driving additional devices that provide power for driving additional devices mounted on a vehicle such as audio, navigation, and black box.

Therefore, when setting the first and second cell banks, it is preferable to set the number of battery cells larger than the second cell bank 122 among the battery cells of the cell parallel line as the first cell bank 112.

### 2.3. Failed Cell Detection Step S300

The failed cell detection step is a step of detecting whether a failed cell occurs due to an open parallel connection line or a CID operation among battery cells included in the first cell bank 112 set in the cell bank setting step S200.

As described above, detecting whether a failed cell occurs among the battery cells of the first cell bank 112 connected in parallel may be performed by an external failed cell detection system, and when a failed cell is detected, a control signal indicating this is transmitted to a control unit (not shown) so that the control unit can recognize that a failed cell occurs in the first cell bank 112.

In this case, the control signal received by the control unit (not shown) from the external failed cell detection system may include, for example, a cell bank identification number or a cell parallel line identification number in order to identify the first cell bank or cell parallel line to which the failed cell belongs among the first battery modules included in the battery pack.

Here, the external failed cell detection system is, for example, in the manner disclosed in Korean Patent Application Nos. 10-2019-0122268 and 10-2019-0122269 filed by the applicant of the present invention and may be configured as a system that detects a failed cell by opening a parallel connection line or operating a CID.

### 2.4. Failed Cell Replacement Step S400

The failed cell replacement step is a step of electrically separating the replacement cell 1222 from the second cell bank 122 and connecting it in parallel to the first cell bank 112 to replace the failed cell when it is detected in the failed cell detection step S300 that a failed cell occurs due to a parallel connection line open or CID operation among the battery cells of the first cell bank 112.

This failed cell replacement step may be configured including the following steps.

### A. Replacement Cell Separation Step S410

The replacement cell separation step is a step of electrically separating the replacement cell 1222 from the second cell bank 122.

This step is to electrically separate the replacement cell 1222, which is originally operating as a member of the second cell bank 122, from the second cell bank 122, and may be implemented by turning off the second switch 134 provided on the parallel connection line b between the replacement cell 1222 and the remaining battery cells of the second cell bank 122.

### B. Replacement Cell Connection Step S420

The step is a step of replacing the failed cell by connecting the replacement cell 1222 in parallel to the first cell bank 112 after the replacement cell is electrically separated from the second cell bank 122 in the replacement cell separation step S410.

This step may be implemented by turning on the first switch 132 provided on the parallel connection line a between the replacement cell 1222 and the battery cells of the first cell bank 112.

Through these steps, the replacement cell 112, which was originally functioning as a member of the second cell bank 122, is electrically separated from the second cell bank 122 and connected in parallel to the first cell bank 112, so that the replacement cell 1222 may be operated as a member of the first cell bank 112 by replacing the failed cell generated in the first cell bank 112.

For example, when a failed cell occurs in the first cell bank 112a included in the first cell parallel line, a control unit (not shown) that receives a control signal from an external failed cell detection system controls the first switch 132a located on the first cell parallel line in an on state, and controls the second switch 134a in an off state. Thus, as shown in FIG. 3, while electrically separating the replacement cell 1222a from the second cell bank 122a and electrically connecting it in parallel with the battery cells of the first cell bank 112a, the replacement cell 1222a replaces the failed cell to function as a member of the first cell bank 112a.

On the other hand, although the technical idea of the present invention has been specifically described according to the above embodiment, it should be noted that the above embodiments are for the purpose of explanation and not limitation. In addition, those skilled in the art in the technical field of the present invention will be able to understand that various embodiments are possible within the scope of the claims of the present disclosure.

## Claims

1. A battery pack (100) including at least one cell parallel line formed by arranging a plurality of battery cells (101) in parallel, the battery pack (100) comprising:
a first cell bank (112) configured by connecting a predetermined number of sequentially adjacent battery cells (101) in parallel from a first cell among battery cells (101) constituting the cell parallel line; and
a second cell bank (122) configured by connecting the remaining cells in parallel except for the battery cells set as the first cell bank (112) among the battery cells (101) constituting the cell parallel line,
wherein the first cell bank (112) and the second cell bank (122) are electrically separated,
wherein among the battery cells (101) of the second cell bank (122), a battery cell closest to the first cell bank (112) is set as a replacement cell (1222),
wherein when a failed cell occurs in the first cell bank (112), the replacement cell (1222) is electrically separated from the second cell bank (122) and connected in parallel to the first cell bank (112) to replace the failed cell,
**characterized in that** the first cell bank (112) is configured to operate as a main power supply source for a principal device in which a battery pack (100) is mounted, and the second cell bank (122) is configured to operate as an auxiliary power supply source for additional devices mounted on the principal device.

2. The battery pack (100) of claim 1, further comprising a switch (130) configured to perform a switching operation for replacing a failed cell occurring in the first cell bank (112) with a replacement cell (1222),
wherein the switch (130) comprises:
a first switch (132) provided on a first parallel connection line connecting a replacement cell (1222) of the second cell bank (122) and battery cells (101) of the first cell bank (112) in parallel to control a connection flow between the replacement cell (1222) and the first cell bank (112); and
a second switch (134) provided on a second parallel connection line connecting a replacement cell (1222) of the second cell bank (122) and the remaining cells in parallel to control a connection flow between the replacement cell (1222) and the remaining cells.

3. The battery pack (100) of claim 2, further comprising a control unit configured to control a switching operation of the first (132) and second (134) switches according to whether a failed cell occurs due to an open parallel connection line or a CID operation in the first cell bank (112).

4. The battery pack (100) of claim 3, wherein in the case of a normal state in which no failed cell occurs in the first cell bank (112), the control unit turns off the first switch (132) and turns on the second switch (134), thereby blocking the connection of the replacement cell (1222) to the battery cells (101) of the first cell bank (112), and connecting the replacement cell (1222) to the remaining battery cells of the second cell bank (122).

5. The battery pack (100) of claim 4, wherein when a failed cell occurs in the first cell bank (112), the control unit turns on the first switch (132) and turns off the second switch (134) to separate the replacement cell (1222) from the second cell bank (122) and connect the replacement cell (1222) to the battery cells (101) of the first cell bank (112), thereby replacing the failed cell with the replacement cell (1222).

6. A cell switching method comprising:
a cell parallel line formation step (S100) of arranging a plurality of battery cells (101) in parallel to form a cell parallel line;
a cell bank setting step (S200) of sequentially connecting a predetermined number of battery cells (101) in parallel from a first cell among battery cells (101) constituting the cell parallel line to be set as a first cell bank (112), and connecting the remaining battery cells in parallel except for the battery cells set as the first cell bank (112), to be set as a second cell bank (122);
a failed cell detection step (S300) of detecting whether a failed cell occurs due to an open parallel connection line or a CID operation in the first cell bank (112); and
a failed cell replacement step (S400) of replacing the failed cell with a replacement cell (1222) belonging to the second cell bank (122) when the failed cell occurs in the first cell bank (112),
**characterized in that** the first cell bank (112) operates as a main power supply source for a principal device in which a battery pack (100) is mounted, and the second cell bank (112) operates as an auxiliary power supply source for additional devices mounted on the principal device.

7. The method of claim 6, wherein the failed cell replacement step (S400) comprises:
a replacement cell separation step (S410) of electrically separating the replacement cell (1222) from the second cell bank (122) by turning off a second switch (134) provided on a parallel connection line between the replacement cell (1222) of the second cell bank (122) and the remaining battery cells; and
a replacement cell connection step (S420) of connecting the replacement cell (1222) separated from the second cell bank (122) to the first cell bank (112) in parallel by turning on a first switch (132) provided on a parallel connection line between the replacement cell (1222) and the battery cells of the first cell bank (112).

8. The method of claim 7, wherein the replacement cell (1222) is located closest to the first cell bank (112) among battery cells (101) of the second cell bank (122).

## Patentansprüche

1. Batteriepack (100), umfassend wenigstens eine parallele Zellleitung, welche durch eine parallele Anordnung einer Mehrzahl von Batteriezellen (101) gebildet ist, wobei der Batteriepack (100) umfasst:
eine erste Zellreihe (112), welche durch Parallelschalten einer vorbestimmten Anzahl sequenziell benachbarter Batteriezellen (101) von einer ersten Zelle unter Batteriezellen (101) eingerichtet ist, welche die parallele Zellleitung begründen; und
eine zweiten Zellreihe (122), welche durch Parallelschalten der verbleibenden Zellen eingerichtet ist, mit Ausnahme der Batteriezellen, welche unter den die parallele Zellleitung begründenden Batteriezellen (101) als die erste Zellreihe (112) festgelegt sind,
wobei die erste Zellreihe (112) und die zweite Zellreihe (122) elektrisch getrennt sind,
wobei unter den Batteriezellen (101) der zweiten Zellreihe (122) eine Batteriezelle als eine Ersatzzelle (1222) festgelegt ist, welche am nächsten an der ersten Zellreihe (112) ist,
wobei, wenn in der ersten Zellreihe (112) eine ausgefallene Zelle auftritt, die Ersatzzelle (1222) elektrisch von der zweiten Zellreihe (122) getrennt wird und mit der ersten Zellreihe (112) parallelgeschaltet wird, um die ausgefallene Zelle zu ersetzen,
**dadurch gekennzeichnet, dass** die erste Zellreihe (112) dazu eingerichtet ist, als eine Hauptenergieversorgungsquelle für eine Hauptvorrichtung zu fungieren, in welcher ein Batteriepack (100) befestigt ist, und die zweite Zellreihe (122) dazu eingerichtet ist, als eine Hilfsenergieversorgungsquelle für zusätzliche Vorrichtungen zu fungieren, welche an der Hauptvorrichtung befestigt sind.

2. Batteriepack (100) nach Anspruch 1, ferner umfassend einen Schalter (130), welcher dazu eingerichtet ist, einen Schaltvorgang zum Ersetzen einer ausgefallenen Zelle, welche in der ersten Zellreihe (112) auftritt, mit einer Ersatzzelle (1222) durchzuführen,
wobei der Schalter (130) umfasst:
einen ersten Schalter (132), welcher an einer ersten parallelen Verbindungsleitung bereitgestellt ist, welche eine Ersatzzelle (1222) der zweiten Zellreihe (122) und Batteriezellen (101) der ersten Zellreihe (112) parallelschaltet, um einen Verbindungsablauf zwischen der Ersatzzelle (1222) und der ersten Zellreihe (112) zu steuern; und
einen zweiten Schalter (134), welcher an einer zweiten parallelen Verbindungsleitung bereitgestellt ist, welche eine Ersatzzelle (1222) der zweiten Zellreihe (122) und die verbleibenden Zellen parallelschaltet, um einen Verbindungsablauf zwischen der Ersatzzelle (1222) und den verbleibenden Zellen zu steuern.

3. Batteriepack (100) nach Anspruch 2, ferner umfassend eine Steuereinheit, welche dazu eingerichtet ist, einen Schaltvorgang des ersten (132) und des zweiten (134) Schalters zu steuern, je nachdem ob eine ausgefallene Zelle aufgrund einer offenen, parallelen Verbindungsleitung oder eines CID-Vorgangs in der ersten Zellreihe (112) auftritt.

4. Batteriepack (100) nach Anspruch 3, wobei, in dem Fall eines Normalzustands, in welchem in der ersten Zellreihe (112) keine ausgefallene Zelle auftritt, die Steuereinheit den ersten Schalter (132) ausschaltet und den zweiten Schalter (134) einschaltet, wodurch die Verbindung der Ersatzzelle (1222) mit den Batteriezellen (101) der ersten Zellreihe (112) blockiert wird und die Ersatzzelle (1222) mit den verbleibenden Batteriezellen der zweiten Zellreihe (122) verbunden wird.

5. Batteriepack (100) nach Anspruch 4, wobei, wenn in der ersten Zellreihe (112) eine ausgefallene Zelle auftritt, die Steuereinheit den ersten Schalter (132) einschaltet und den zweiten Schalter (134) ausschaltet, um die Ersatzzelle (1222) von der zweiten Zellreihe (122) zu trennen und die Ersatzzelle (1222) mit den Batteriezellen (101) der ersten Zellreihe (112) zu verbinden, wodurch die ausgefallene Zelle mit der Ersatzzelle (1222) ersetzt wird.

6. Zellschaltverfahren, umfassend:
einen parallele Zellleitung-Bildungsschritt (S100) eines parallelen Anordnens einer Mehrzahl von Batteriezellen (101), um eine parallele Zellleitung zu bilden;
einen Zellreihe-Festlegungsschritt (S200) eines sequenziellen Parallelschaltens einer vorbestimmten Anzahl von Batteriezellen (101) von einer ersten Zelle unter Batteriezellen (101), welche die als eine erste Zellreihe (112) festzulegende parallele Zellleitung begründen, und eines Parallelschaltens der als eine zweite Zellreihe (122) festzulegenden verbleibenden Batteriezellen, mit Ausnahme der Batteriezellen, welche als die erste Zellreihe (112) festgelegt sind;
einen ausgefallene Zelle-Detektionsschritt (S300) eines Detektierens, ob eine ausgefallene Zelle aufgrund einer offenen, parallelen Verbindungsleitung oder eines CID-Vorgangs in der ersten Zellreihe (112) auftritt; und
einen ausgefallene Zelle-Ersatzschritt (S400) eines Ersetzens der ausgefallenen Zelle mit einer Ersatzzelle (1222), welche zu der zweiten Zellreihe (122) gehört, wenn die ausgefallene Zelle in der ersten Zellreihe (112) auftritt,
**dadurch gekennzeichnet, dass** die erste Zellreihe (112) als eine Hauptenergieversorgungsquelle für eine Hauptvorrichtung fungiert, in welcher ein Batteriepack (100) befestigt ist, und die zweite Zellreihe (122) als eine Hilfsenergieversorgungsquelle für zusätzliche Vorrichtungen fungiert, welche an der Hauptvorrichtung befestigt sind.

7. Verfahren nach Anspruch 6, wobei der ausgefallene Zelle-Ersatzschritt (S400) umfasst:
einen Ersatzzelle-Trennschritt (S410) eines elektrischen Trennens der Ersatzzelle (1222) von der zweiten Zellreihe (122) durch Ausschalten eines zweiten Schalters (134), welcher an einer parallelen Verbindungsleitung zwischen der Ersatzzelle (1222) der zweiten Zellreihe (122) und den verbleibenden Batteriezellen bereitgestellt ist; und
einen Ersatzzelle-Verbindungsschritt (S420) eines Parallelschaltens der Ersatzzelle (1222), welche von der zweiten Zellreihe (122) getrennt ist, mit der ersten Zellreihe (112) durch Anschalten eines ersten Schalters (132), welcher an einer parallelen Verbindungsleitung zwischen der Ersatzzelle (1222) und den Batteriezellen der ersten Zellreihe (112) bereitgestellt ist.

8. Verfahren nach Anspruch 7, wobei die Ersatzzelle (1222) unter den Batteriezellen (101) der zweiten Zellreihe (122) am nächsten an der ersten Zellreihe (112) angeordnet ist.

## Revendications

1. Bloc-batterie (100) comportant au moins une ligne en parallèle de cellules formée en disposant une pluralité de cellules de batterie (101) en parallèle, le bloc-batterie (100) comprenant :
une première banque de cellules (112) configurée en connectant un nombre prédéterminé de cellules de batterie (101) séquentiellement adjacentes en parallèle à partir d'une première cellule parmi des cellules de batterie (101) constituant la ligne en parallèle de cellules ; et
une seconde banque de cellules (122) configurée en connectant les cellules restantes en parallèle à l'exception des cellules de batterie établies comme la première banque de cellules (112) parmi les cellules de batterie (101) constituant la ligne en parallèle de cellules,
dans lequel la première banque de cellules (112) et la seconde banque de cellules (122) sont électriquement séparées,
dans lequel, parmi les cellules de batterie (101) de la seconde banque de cellules (122), une cellule de batterie la plus proche de la première banque de cellules (112) est établie comme une cellule de remplacement (1222),
dans lequel, lorsqu'une cellule défaillante apparaît dans la première banque de cellules (112), la cellule de remplacement (1222) est électriquement séparée de la seconde banque de cellules (122) et connectée en parallèle à la première banque de cellules (112) pour remplacer la cellule défaillante,
**caractérisé en ce que** la première banque de cellules (112) est configurée pour fonctionner comme une source d'alimentation principale pour un dispositif prépondérant dans lequel un bloc-batterie (100) est monté, et la seconde banque de cellules (122) est configurée pour fonctionner comme une source d'alimentation auxiliaire pour des dispositifs supplémentaires montés sur le dispositif prépondérant.

2. Bloc-batterie (100) selon la revendication 1, comprenant en outre un commutateur (130) configuré pour effectuer une opération de commutation pour remplacer une cellule défaillante apparaissant dans la première banque de cellules (112) par une cellule de remplacement (1222),
dans lequel le commutateur (130) comprend :
un premier commutateur (132) disposé sur une première ligne de connexion parallèle connectant une cellule de remplacement (1222) de la seconde banque de cellules (122) et des cellules de batterie (101) de la première banque de cellules (112) en parallèle pour commander un flux de connexion entre la cellule de remplacement (1222) et la première banque de cellules (112) ; et
un second commutateur (134) disposé sur une seconde ligne de connexion parallèle connectant une cellule de remplacement (1222) de la seconde banque de cellules (122) et les cellules restantes en parallèle pour commander un flux de connexion entre la cellule de remplacement (1222) et les cellules restantes.

3. Bloc-batterie (100) selon la revendication 2, comprenant en outre une unité de commande configurée pour commander une opération de commutation des premier (132) et second (134) commutateurs selon qu'une cellule défaillante apparaît en raison d'une ligne de connexion parallèle ouverte ou d'une opération CID dans la première banque de cellules (112).

4. Bloc-batterie (100) selon la revendication 3, dans lequel, dans le cas d'un état normal dans lequel aucune cellule défaillante n'apparaît dans la première banque de cellules (112), l'unité de commande désactive le premier commutateur (132) et active le second commutateur (134), bloquant ainsi la connexion de la cellule de remplacement (1222) aux cellules de batterie (101) de la première banque de cellules (112), et connectant la cellule de remplacement (1222) aux cellules de batterie restantes de la seconde banque de cellules (122).

5. Bloc-batterie (100) selon la revendication 4, dans lequel, lorsqu'une cellule défaillante apparaît dans la première banque de cellules (112), l'unité de commande active le premier commutateur (132) et désactive le second commutateur (134) pour séparer la cellule de remplacement (1222) de la seconde banque de cellules (122) et connecter la cellule de remplacement (1222) aux cellules de batterie (101) de la première banque de cellules (112), remplaçant ainsi la cellule défaillante par la cellule de remplacement (1222).

6. Procédé de commutation de cellules comprenant :
une étape de formation de ligne en parallèle de cellules (5100) consistant à disposer une pluralité de cellules de batterie (101) en parallèle pour former une ligne en, parallèle de cellules ;
une étape d'établissement de banque de cellules (S200) consistant à connecter séquentiellement un nombre prédéterminé de cellules de batterie (101) en parallèle à partir d'une première cellule parmi des cellules de batterie (101) constituant la ligne en parallèle de cellules à établir comme une première banque de cellules (112), et connecter les cellules de batterie restantes en parallèle, à l'exception des cellules de batterie établies comme la première banque de cellules (112), à établir comme une seconde banque de cellules (122) ;
une étape de détection de cellule défaillante (S300) consistant à détecter si une cellule défaillante apparaît en raison d'une ligne de connexion parallèle ouverte ou d'une opération CID dans la première banque de cellules (112) ; et
une étape de remplacement de cellule défaillante (S400) consistant à remplacer la cellule défaillante par une cellule de remplacement (1222) appartenant à la seconde banque de cellules (122) lorsque la cellule défaillante apparaît dans la première banque de cellules (112),
**caractérisé en ce que** la première banque de cellules (112) fonctionne comme une source d'alimentation principale pour un dispositif prépondérant dans lequel un bloc-batterie (100) est monté, et la seconde banque de cellules (112) fonctionne comme une source d'alimentation auxiliaire pour des dispositifs supplémentaires montés sur le dispositif prépondérant.

7. Procédé selon la revendication 6, dans lequel l'étape de remplacement de cellule défaillante (S400) comprend :
une étape de séparation de cellules de remplacement (S410) consistant à séparer électriquement la cellule de remplacement (1222) de la seconde banque de cellules (122) en désactivant un second commutateur (134) prévu sur une ligne de connexion parallèle entre la cellule de remplacement (1222) de la seconde banque de cellules (122) et les cellules de batterie restantes ; et
une étape de connexion de cellule de remplacement (S420) consistant à connecter la cellule de remplacement (1222) séparée de la seconde banque de cellules (122) à la première banque de cellules (112) en parallèle en activant un premier commutateur (132) prévu sur une ligne de connexion parallèle entre la cellule de remplacement (1222) et les cellules de batterie de la première banque de cellules (112).

8. Procédé selon la revendication 7, dans lequel la cellule de remplacement (1222) est située la plus proche de la première banque de cellules (112) parmi des cellules de batterie (101) de la seconde banque de cellules (122).
